# EUROPÄISCHE PATENTANMELDUNG

(11) **EP 1 736 914 A2**
(43) Veröffentlichungstag der Anmeldung: **27.12.2006**
(21) Anmeldenummer: 06012746.1
(22) Anmeldetag: 21.06.2006
(51) Int. Cl.: G06K 19/06, G06K 7/12

(54) **Optische Kodierung und Verfahren zu deren Herstellung**

(30) Priorität: 21.06.2005 DE 102005028741
(71) Anmelder: Mayer, Anton, 82205 Gilching (DE); Stenning, Paul, Lewes East Sussex BN7 2LN (GB)
(72) Erfinder: Mayer, Anton, 82205 Gilching (DE)
(74) Vertreter: Zimmermann, Gerd Heinrich

(57) **Zusammenfassung**

Optische Kodierung, die bei Bestrahlung mit elektromagnetischer Anregungsstrahlung aus dem infraroten Spektrum elektromagnetische Strahlung emittiert, die gegenüber der Anregungsstrahlung höherenergetisch ist. Die optische Kodierung kann auf oder in jede Art von Informationsträger auf- bzw. eingebracht werden, wobei herkömmliche Druckverfahren wie Laserdruck, Rotationstiefdruck, Flexodruck, Offsetdruck, Siebdruck, Thermotransferdruck oder Tintenstrahldruck Einsatz finden können. Zum Entschlüsseln der optischen Kodierung wird die optische Kodierung mit elektromagnetischer Anregungsstrahlung aus dem infraroten Spektrum, vorzugsweise mit einer Wellenlänge von ca. 980 nm oder ca. 1.500 nm bestrahlt, wobei die optischen Kodierung elektromagnetische Strahlung emittiert und die von der optischen Kodierung emittierte elektromagnetische Strahlung, die gegenüber der Anregungsstrahlung höherenergetisch ist, wird ausgelesen.

## Beschreibung

Die vorliegende Erfindung betrifft eine optische Kodierung, ein Verfahren zu deren Herstellung, einen Informationsträger, der eine optische Kodierung aufweist und ein Verfahren zum automatisierten Auslesen der lumineszierenden Markierung.

Mit Hilfe von industriell einsetzbaren optischen Kodierungen, wie zum Beispiel 1-D Codes (z. B. Balken-, Strich- bzw. Barcode) oder 2-D Codes (z. B. Stapelcodes, Matrixcodes) ist es möglich, Informationen auf einfache Weise zu verschlüsseln und maschinell lesbar zu machen. Hierzu werden die Markierungen entweder unmittelbar auf einen Gegenstand, wie zum Beispiel eine Handelsware bzw. deren Verpackung, oder z. B. auf Lieferscheine, Etiketten, Lagerkarteikarten, Ausweise, Flugscheine etc. gedruckt. Zum Auslesen bzw. Dekodieren verwendet man spezielle Lesegeräte, die die Kodierung meist mit elektromagnetischer Strahlung im optischen Bereich beleuchtet, und die unterschiedliche Stärke der Reflexion misst. Darüber hinaus gibt es Technologien, die fluoreszierende, für das menschliche Auge nicht sichtbare Pigmente benutzen, wobei die von den Kodierungen ausgesandte Strahlung stets niederenergetischer ist als die Strahlung, mit der die Kodierung beleuchtet wird.

Optische 1-D und 2-D Kodierungen aus dem Stand der Technik stellen üblicher Weise ein Muster aus schwarz und weiß bedruckten Bereichen dar. Die Datenerfassung bei diesen optischen Kodierungen erfolgt auf optischem Wege durch die unterschiedliche Reflexion der von einem Lesegerät ausgesendeten Strahlung an den schwarzen Bereichen (schwache Reflexion) und weißen Bereichen (starke Reflexion). Die reflektierten Strahlen erzeugen im Lesegerät einen elektrischen Impulszug, der der Sequenz der abgetasteten bedruckten Bereiche und Lücken entspricht. Die einzelnen Stromimpulse werden gemessen und über eine elektronische Auswertung, der sog. Dekodierung, wiederum in die entsprechenden Zeichen umgesetzt.

Äußere Bedingungen wie z. B. Störeinflüsse durch Sonneneinstrahlung, Schwingungen oder Verschmutzungen auf den Kodierungen beeinflussen maßgeblich das Lesen und somit das sichere Erkennen der Ware. Dabei spielt der messbare Kontrast eine wesentliche Rolle: Unterscheiden sich auf Grund von Störeinflüssen die gemessenen Reflektionen von schwarzen Bereichen unwesentlich von den gemessenen Reflektionen von weißen Bereichen (analoges gilt für Farbcodes), kann ein zuverlässiges Auslesen nicht mehr garantiert werden; das Auslesen kann fehlerhaft erfolgen. Wird eine Kodierung jedoch nicht richtig entschlüsselt, kann dies, je nach Anwendung, bedeuten, dass das Fördergut einem falschen Zielort zugewiesen, durch falsche Bearbeitung sogar zerstört wird, oder ein Produkt an der Supermarktkasse nicht richtig oder überhaupt nicht erkannt wird. Problematisch kann ferner sein, dass die optische Kodierung immer im Sichtfeld des Lesegeräts sein muss, da die verwendeten Wellenlängen zum Bestrahlen der Kodierung und die der reflektierten Strahlen gewisse Materialien, wie z. B. Papier, nicht durchdringen. Daher befindet sich die optische Kodierung herkömmlicher Weise stets auf der Oberfläche des Informationsträgers und ist relativ ungeschützt.

Es gibt zahlreiche Anwendungen, bei denen es aus sicherheitstechnischen oder ästhetischoptischen Gründen nicht gewünscht ist, dass die optische Kodierung eines Gegenstandes für das bloße Auge erkennbar ist und/oder sich ungeschützt auf seiner Oberfläche befindet. Zu diesen Anwendungen gehören zum Beispiel Kodierungen für den Plagiatschutz von bspw. Medikamenten oder Kodierungen auf Konsumgütern, bei denen das Produkt selber so klein ist, dass eine automatisch erkennbare Markierung so groß sein müsste, dass der optisch ästhetische Eindruck gestört wird. In diesem Fall können die oben beschriebenen Anwendungen keinen Einsatz finden.

Darüber hinaus gibt es zahlreiche Anwendungen, bei denen meist aus sicherheitstechnischen Gründen unabdingbar ist, dass die Kodierung nicht mühelos kopiert bzw. nachgemacht werden kann. Zu diesen Anwendungen gehören sämtliche Kodierungen auf Wert- oder Sicherheitsdokumenten wie zum Beispiel Ausweisen, Pässen, Warensicherungsetiketten, Banknoten, Schecks, Gutscheinen, Eintrittskarten oder Einkaufsquittungen. Oben genannte Kodierungen können jedoch einfach mit im Handel überall erhältlichen Vervielfältigungsgeräten wie z. B. Kopiergeräten nachgemacht werden bzw. mit einem Computer, einem herkömmlichen Drucker und einer entsprechenden Software selbst hergestellt werden.

Daher ist es Aufgabe der vorliegenden Erfindung, eine optische Kodierung, ein Verfahren zur Herstellung einer optischen Kodierung, einen Informationsträger umfassend eine optische Kodierung und ein Verfahren zum automatisierten Auslesen einer optischen Kodierung zur Verfügung zu stellen, wobei die Probleme aus dem Stand der Technik zumindest teilweise überwunden werden.

Diese Aufgabe wird gelöst durch die optische Kodierung, das Verfahren zur Herstellung einer optischen Kodierung, den Informationsträger umfassend eine optische Kodierung und das Verfahren zum Auslesen einer optischen Kodierung mit den Merkmalen der unabhängigen Patentansprüche gelöst. Die Unteransprüche bezeichnen vorteilhafte Ausgestaltungen und Weiterbildungen der Erfindung.

Gemäß eines Aspektes der vorliegenden Erfindung wird eine optische Kodierung zur Verfügung gestellt, die bei Bestrahlung mit Strahlen aus einem ersten Energiespektrum Strahlen aus einem zweiten Energiespektrum emittiert, wobei das zweite Energiespektrum Strahlen höherer Energien umfasst. Gemäß weiterer Aspekte der vorliegenden Erfindung wird ein Verfahren zur Herstellung einer derartigen optischen Kodierung vorgestellt, ein Informationsträger umfassend eine derartige optische Kodierung und das Verfahren zum Auslesen einer optischen Kodierung zur Verfügung gestellt.

Die erfindungsgemäße optische Kodierung hat den Vorteil, dass sie unter Tageslicht nicht als Kodierung erkennbar ist. Darüber hinaus beeinflussen Verschmutzungen auf den Kodierungen nicht in dem Maße deren Lesbarkeit, wie es bei Kodierungen der Fall ist, die durch Strahlung im optischen sichtbaren Bereich angeregt werden. Dies liegt daran, dass zumindest die Anregungsstrahlung im infraroten Spektrum liegt und weniger von Verschmutzungen absorbiert wird als Strahlung im sichtbaren optischen Spektrum. Liegt sowohl, wie es nach einer bevorzugten erfindungsgemäßen Ausführungsform vorgeschlagen wird, die Anregungsstrahlung, als auch die emittierte Strahlung im infraroten Spektrum, wird ein vergleichsweise nur minimaler Anteil der Strahlen von bspw. Schmutz- oder über der Kodierung liegenden Papierschichten absorbiert. Des Weiteren ist die Nachmachbarkeit der Kodierung auf Grund der besonderen Eigenschaft der optischen Kodierung, nämlich auf Grund von Strahlung geringerer Energie aus dem Infrarotbereich, Strahlung höherer Energie, bspw. aus dem sichtbaren Spektrum, zu emittieren, äußerst schwierig.

Bei erfindungsgemäßen optischen Kodierungen kann der für das Auslesen so wichtige Kontrast im Vergleich zu herkömmlichen Kodierungen bereits dadurch vergrößert werden, dass Bereiche, die bei herkömmlichen Kodierungen weiß blieben und daher in hohem Maße Strahlung aus dem sichtbaren optischen Bereich reflektieren, darüber hinaus Strahlung aus dem sichtbaren und/oder nicht sichtbaren infraroten Bereich emittieren.

Der Begriff Informationsträger im Rahmen der vorliegenden Erfindung umfasst alle Gegenstände, auf die oder in die eine erfindungsgemäße Kodierung an- oder eingebracht werden kann. Dies ist entweder der Gegenstand selbst, wie zum Beispiel eine Handelsware bzw. deren Verpackung, oder bspw. Papier- oder Kunststoffblätter wie z.B. Lieferscheine, Etiketten, Lagerkarteikarten, Ausweise, Flugscheine etc. Die erfindungsgemäßen Kodierungen können direkt auf den zu markierenden Gegenständen angebracht werden, sofern deren Oberfläche eine hinreichende Haftung der Kodierung erlaubt. Auch ist es möglich, die erfindungsgemäße optische Kodierung direkt in einen Gegenstand einzubringen, wie z. B. in Plastik, Kunststoffe, Papier, Wachs oder Glas. Es ist typisch, dass die optische Kodierung auf Metall oder Holzoberflächen, insbesondere sägefrischen Holzoberflächen oder auch Hobelware, oder auf menschlicher oder tierischer Haupt als permanente oder abwaschbare Kodierung (sog. "Tattoo") bspw. zur Identifizierung von Tieren in der klinischen Forschung, insbesondere eigens zum Zweck der Forschung gezüchteter Tiere wie z. B. von Mäusen anbringbar ist. Es ist besonders bevorzugt, dass es sich dabei um auf Versuchstiere, insbesondere transgene Mäuse, verpflanzte menschliche Haut handelt. Darüber hinaus ist es typisch, dass die Kodierung in Metallen eingebracht wird wie z. B. Lötzinn oder auch Titan. Typischer Weise ist die erfindungsgemäße optische Kodierung maschinen-lesbar. Die erfindungsgemäße optische Kodierung wird vorzugsweise mit Hilfe von bekannten Kodierungssystematiken kodiert oder ist eine proprietär für den Einsatz der erfindungsgemäßen Kodierung entwickelte Kodierung. Ferner umfasst der Begriff "optisches Spektrum" sowohl das infrarote, als auch das optisch sichtbare Spektrum.

Der für die im optischen Spektrum emittierte Strahlung verantwortliche Bestandteil des Materials zur Kodierung besteht im Wesentlichen aus anorganischen Materialien. Bevorzugt sind dabei anorganische Materialien, insbesondere Keramiken, die chemisch inert und/oder nicht toxisch sind und/oder unter Einfluss von ultravioletten Strahlen ihre besondere Eigenschaft nicht verlieren. Damit können die erfindungsgemäßen Kodierungen insbesondere in der Lebensmittel- und Pharmaindustrie Einsatz finden. Bevorzugt werden langlebige anorganische Materialien mit einer Haltbarkeit in der Größenordnung größer gleich 10⁴ Jahren. Besonders bevorzugt sind lumineszierende Nanopigmente als für die emittierte Strahlung verantwortlicher Bestandteil des Materials zur Kodierung. Die benutzten Materialien, insbesondere die lumineszierenden Nanopigmente, können auch zur Identifizierung genutzt werden, indem aus materialcharakteristischen Funktionen bei ihrer Anregung und/oder beim Nachleuchten, d. h. unmittelbar nach dem Abschalten der Anregung, spezifische Informationen ausgelesen werden können. Derartige Informationen können bspw. Informationen zu der Materialzusammensetzung, zu dem Hersteller, zu Produktionslose etc. sein. Es ist sinnvoll, dass zum Auslesen dieser Informationen Lesegeräte zum Einsatz kommen, deren zeitliche Auflösung kleiner als 0,1 Millisekunden, insbesondere 10 Mikrosekunden und kleiner ist. Typische Zeiten zwischen dem Einschalten der Anregung bis zum Erreichen eines Emissionsplateaus betragen 0,1 bis 0,2 Millisekunden und hängen in der Regel sowohl von der Art des Materials, als auch von der Temperatur ab. Unter Emissionsplateau wird ein Sättigungsleistungsemissionswert verstanden, der angibt, wie viel Leistung von der erfindungsgemäßen optischen Kodierung bei gleich bleibender Anregung emittiert wird. Typische Nachleuchtzeiträume zwischen dem Zeitpunkt des Ausschaltens der Anregung bis zum Ausklingen der Emission betragen zwischen 0,2 Millisekunden und 0,3 Millisekunden und hängen in der Regel sowohl von der Art des Materials, als auch von der Temperatur ab. Unter Ausklingen der Emission wird dabei verstanden, dass weniger als 5% der ursprünglich maximalen Emissionsleistung von der Kodierung emittiert wird. Derartig variierbare Materialeigenschaften können teilweise oder vollständige Träger der kodierten Information sein. In anderen Worten kann die optische Kodierung darin bestehen, dass unterschiedliche Zusammensetzungen der gewählten Materialien in oder auf dem zu kodierenden Informationsträger ein- oder aufgebracht werden, und dabei auf Grund der unterschiedlichen Materialcharakteristika bspw. bzgl. Anregungs- und Nachleuchteeigenschaften spezifische Informationen in sich tragen. Diese können wiederum als optische Kodierung ausgelesen werden. Es ist bevorzugt, dass Materialcharakteristika genutzt werden, um einen eindeutigen "Fingerabdruck" des zur Kodierung verwendeten Materials aufzunehmen. Dies kann beispielsweise für den Nachweis der Herkunft und der Echtheit der Markierung mit LNP genutzt werden, z. B. im Plagiatschutz. Typischer Weise können diese "Fingerabdrücke" in einer Datenbank abgelegt werden, insbesondere um ein späteres Wiederfinden zu erleichtern. Der Begriff "Fingerabdruck" stellt im Rahmen der vorliegenden Anmeldung auf die einzigartigen Eigenschaften des Materials ab, die bspw. in den oben beschriebenen Anregungs- und/oder Nachleuchteeigenschaften bestehen, und die es erlauben, die verschiedenen Materialarten voneinander zu unterscheiden und sie somit als Träger von kodierter Information einzusetzen.

In einer bevorzugten Ausführungsform besteht die optische Kodierung im wesentlichen aus einem lumineszierenden Material, das in einem gewünschten Muster angeordnet ist, bspw. einem Punktmuster, und das mit einer festen Wellenlänge angeregt wird und Strahlung in einem definierten optischen Bereich emittiert, der entweder für das menschliche Auge sichtbar oder unsichtbar sein kann. Das bedeutet, der optische Bereich, in dem die erfindungsgemäße optische Kodierung typischer Weise emittiert, ist der gesamte sichtbare Bereich, insbesondere Wellenlängen von ca. 390 nm bis 780 nm, sowie der nahe infrarote Bereich, also Wellenlängen von 780nm bis ca. 1600nm. Es ist besonders bevorzugt, dass die Wellenlänge der erfindungsgemäßen optischen Kodierung zwischen 100nm und 1.100nm liegt. Ein Punktmuster besteht z. B. aus einem Gitter von horizontalen und vertikalen Linien die - je nach kodierter binärer Information - an ihren Schnittpunkten entweder einen Punkt aus den erfindungsgemäßen Materialien erhalten, oder nicht. Stand der Technik ist z. B. das als Braille Schrift bekannte und bei sehbehinderten Personen als sensorisches Alphabet eingesetzte Punktmuster.

In einer weiteren bevorzugten Ausführungsform besteht die Kodierung aus mindestens zwei unterschiedlichen Materialien, wobei die unterschiedlichen Materialien vorzugsweise mit Strahlung identischer Wellenlänge angeregt werden und dabei Strahlung unterschiedlicher Wellenlänge emittieren. Denkbar sind beispielsweise zwei, fünf, sieben oder auch mehr verschiedene Materialien, die in einem gewünschten Muster auf einem Informationsträger angeordnet werden, und deren emittierte Strahlungen sich von allen anderen emittierten Strahlungen der anderen Materialien unterscheiden. Typische Wellenlängenintervalle der emittierten Strahlung liegen im gelben, orangen, roten, grünen, blauen, violetten oder infraroten Bereich. Es ist bevorzugt, dass die optische Kodierung mit infraroter Strahlung im Intervall von 930nm bis 980nm, oder von 1.500nm bis 1.600 nm angeregt wird. Die typische Anregungswellenlänge liegt bei ca. 1 µm, vorzugsweise bei ca. 980 nm, oder bei ca. 1,5 µm, vorzugsweise bei ca. 1.500 nm.

Gemäß einer bevorzugten Ausführungsform ist die erfindungsgemäße Kodierung eine Folge von Schriftzeichen, insbesondere von Zahlen und Buchstaben. In einer weiteren Ausführungsform stellt die optische Kodierung eine zufällig und/oder chaotisch hergestellte Geometrie dar, die einen lumineszierenden "Fingerabdruck" bildet.

Gemäß einer weiteren bevorzugten Ausführungsform ist die erfindungsgemäße Kodierung ein Barcode oder Strichcode. Dabei handelt es sich um maschinell lesbare Codierungen von alphanumerischen Zeichen, insbesondere Zahlen, die in der Regel aus senkrecht angeordneten Strichen unterschiedlicher Breite und/oder mit unterschiedlichen Abständen besteht. Bar- und Strichcodes werden beispielsweise zur Kennzeichnung von Handelswaren benutzt und/oder zur Erfassung des Kaufpreises an der Warenhauskasse eingesetzt. Die Sequenz der Striche und Lücken entspricht einer bestimmten Reihenfolge von numerischen oder alphanumerischen Zeichen.

Gemäß weiteren bevorzugten Ausführungsformen lassen sich 2-D Codes, wie Stapel- oder Matrixcodes, und 3-D Codes (Farbcodes) herstellen.

Die Datenerfassung beim Lesen der erfindungsgemäßen Kodierungen erfolgt durch die Messung der von dem Muster aus lumineszierenden Material ausgesandten Strahlung, die das Material nach Anregung im infraroten Strahlungsspektrum emittiert. Die Strahlen lassen im optischen Empfänger des Lesegerätes einen elektrischen Impulszug entstehen, der der Sequenz der bedruckten Bereiche und Lücken entspricht. Je weniger Strahlen emittiert werden, desto kleiner ist der erzeugte Stromimpuls. Weist die Kodierung unterschiedliche Bereiche auf, die mit unterschiedlichen Materialien bedruckt sind und unterschiedliche optische Strahlung emittieren, muss das Lesegerät darüber hinaus die empfangene Strahlung wellenlängenempfindlich messen können. Die gelesene Information wird über eine elektronische Auswertung, die Dekodierung, in die entsprechenden Zeichen umgesetzt, die schließlich in einen Computer übertragen werden; der Code ist entschlüsselt, das Produkt ist erkannt. Die erfindungsgemäße Kodierung kann beispielsweise ein "Codabar", insbesondere für den medizinisch-klinischen Bereich, ein "Code 2/5 überlappt" oder ein "Code 39" sein, der gerne in Industrie, Handel und bei Behörden eingesetzt wird. Diese Codes sind dem Fachmann bekannt und müssen an dieser Stelle nicht weiter erläutert werden. Des Weiteren kann es sich im Fall der Strichcodes auch um die EU-Standards EN 797, EN 798, EN 799, EN 800, EN 801Codes handeln. Exemplarisch für mit dem erfindungsgemäßen Verfahren herstellbare Stapel- und Matrixcodes seien der Code 49, Code 16K, Codablock oder PDF417 genannt.

Die gängigen Druckverfahren, wie z. B. Laserdruck-, Rotationstiefdruck-, Flexodruck-, Offsetdruck-, Siebdruck-, Thermotransferdruck- oder Tintenstrahldruckverfahren können zum Drucken der Kodierung eingesetzt werden. Die Druckfarbe umfasst eine Trägersubstanz und das lumineszierende Material, das bei Anregung elektromagnetische Strahlung emittiert. Die Korngröße des lumineszierenden Materials liegt vorzugsweise zwischen 0,3 µm und 100 µm, besonders bevorzugt sind Korngrößen im Bereich von 0,3 µm bis 1 µm, 3 µm bis 5 µm oder 10 µm bis 100 µm.

Gemäß eines weiteren bevorzugten Aspektes der vorliegenden Erfindung wird ein Verfahren zum Entschlüsseln einer optischen Kodierung zur Verfügung gestellt, das folgende Schritte umfasst:
- Die optische Kodierung wird zur Verfügung gestellt;
- Die optische Kodierung wird mit elektromagnetischer Anregungsstrahlung aus dem infraroten Spektrum, vorzugsweise mit einer Wellenlänge von ca. 980 nm oder 1,5 µm, insbesondere ca. 1.500nm, bestrahlt, wobei die optischen Kodierung elektromagnetische Strahlung emittiert; und
- die von der optischen Kodierung emittierte elektromagnetische Strahlung, die gegenüber der Anregungsstrahlung höherenergetisch ist, wird ausgelesen.

Nachfolgend wird die Erfindung beispielhaft anhand der begleitenden Figuren erläutert.
Figur 1 zeigt eine beispielhafte erfindungsgemäße Kodierung sowie einen Leseapparat derselben.
Figur 2a zeigt einen beispielhaften Ausschnitt einer Strichkodierung.
Figur 2b zeigt die gemessene Strahlungsintensität beim Auslesen der Strichkodierung von Fig. 2a, wenn sie eine Strichkodierung aus dem Stand der Technik darstellt.
Figur 2c zeigt die gemessene Strahlungsintensität beim Auslesen der Strichkodierung von Fig. 2a, wenn sie eine erfindungsgemäße Strichkodierung darstellt.
Fig. 3 zeigt die emittierte Strahlungsleistung eines erfindungsgemäß zur Kodierung eingesetzten Materials in Abhängigkeit der Zeit

Der Informationsträger 1 der begleitenden Figur weist eine Kodierung 2 auf. Diese besteht in vorliegendem Beispiel aus einem Matrixcode, der mit einem keramischen Material geschrieben wurde, das bei Bestrahlung mit elektromagnetischer Strahlung aus dem infraroten Spektrum Strahlung im sichtbaren optischen Spektrum emittiert. Zum Auslesen der Information wird mit Hilfe des Lesegeräts 5 eine infrarote Anregungsstrahlung 3 von ca. 980 nm ausgesandt und auf die optische Kodierung 2 gerichtet. Die Energiedichte der Anregungsstrahlung liegt unter 10 W/cm². Das keramische Material der Kodierung wird hierdurch zur Emission von Strahlung im sichtbaren Bereich angeregt, z. B. von Strahlung mit einer Wellenlänge von ca. 550 nm (grün). Ein Teil 4 der von der Kodierung emittierten Strahlung wird vom Lesegerät aufgenommen und analysiert, d. h. der Code wird ausgelesen. Die Kodierung kann derart angebracht sein, dass sie mit einfachem Auge unter Tageslicht nicht erkennbar ist. Wenn gewünscht, kann die Kodierung über das keramische Material hinaus Farbelemente aufweisen, die zwar nicht dem maschinellen Auslesen der Kodierung dienen müssen, die aber die Kodierung auch für das einfache Auge unter Tageslicht erkennbar machen.

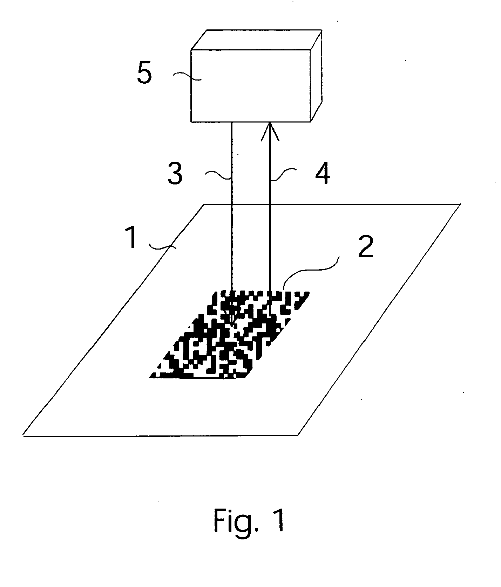

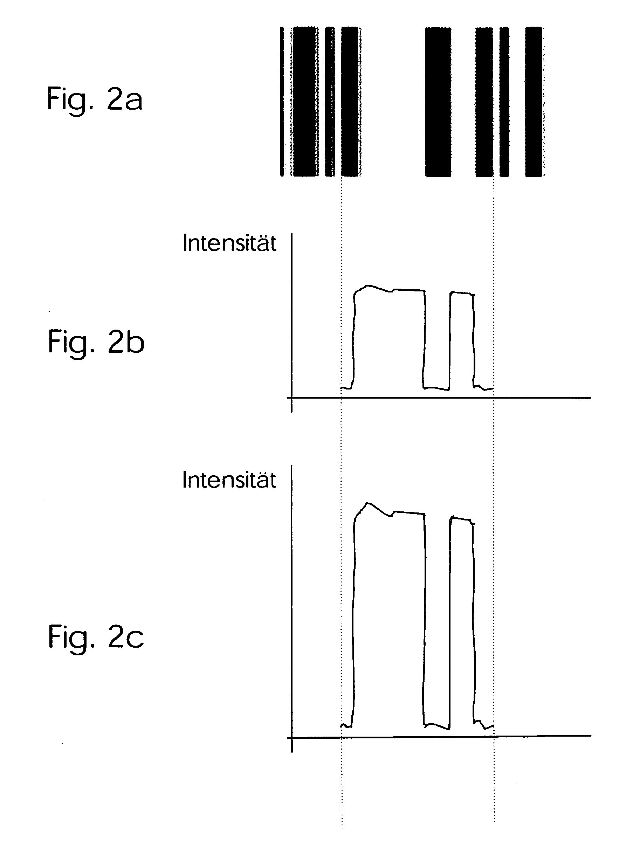

In Fig. 1 stellt die Kodierung 2 einen Matrixcode dar, der mit dem einfachen Auge einem herkömmlichen Matrixcode gleicht. Bei Bestrahlung mit der infraroten Anregungsstrahlung jedoch wird deutlich, dass die Bereiche, die für das menschliche Auge die weißen Bereiche darstellen, nicht nur das Umgebungslicht stärker reflektieren als die Bereiche, die für das menschliche Auge die schwarzen Bereiche darstellen, sondern darüber hinaus auch noch selbst elektromagnetische Strahlung emittieren. Die mit einem Lesegerät 5 gemessene Intensität bei einer beispielhaften Kodierung gemäß Fig. 2a ist in den Figuren 2b und 2c dargestellt. Die in Fig. 2b abgebildete Intensität wird beim Auslesen des Strichcodes aus Fig. 2a gemessen, wobei der Strichcode aus dem Stand der Technik stammt. Die in Fig. 2c abgebildete Intensität wird beim Auslesen des Strichcodes aus Fig. 2a gemessen, wobei es sich bei dem Strichcode um einen erfindungsgemäßen Strichcode handelt, der bei Anregung durch infrarote Strahlung in den weißen Bereichen höherenergetische Strahlung, z. B. grünes Licht, emittiert. Dadurch ist die gemessene Intensität deutlich höher, womit der Kontrast zwischen den hellen und dunklen Bereichen erhöht wird. Daher kann die erfindungsgemäße Kodierung zuverlässiger ausgelesen werden. In anderen Worten können sich größere Verunreinigungen auf der Kodierung befinden, ohne dass der Code nicht mehr entziffert werden kann. Darüber hinaus kann die Kodierung gegenüber herkömmlichen Kodierungen bei gleicher Lesesicherheit verkleinert werden, womit das Verhältnis aus Informationsmenge zu benötigtem Platz gegenüber herkömmlichen Kodierungen verbessert werden kann.

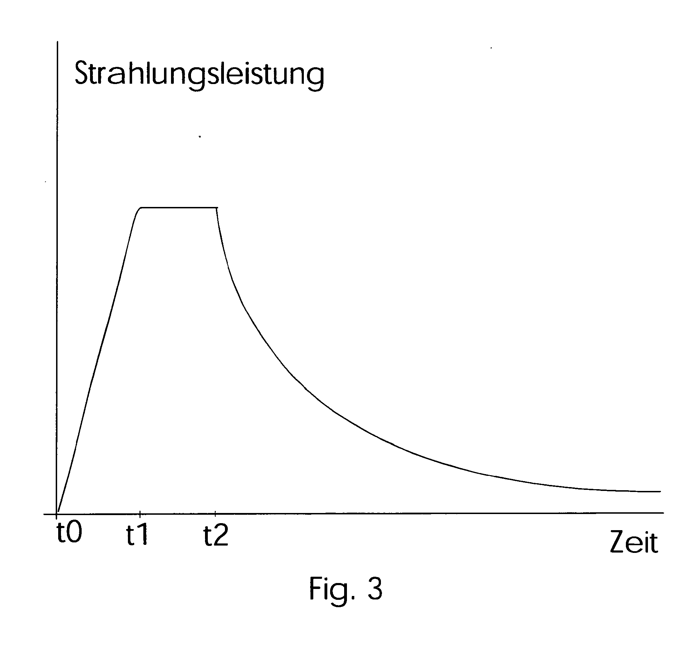

Fig. 3 zeigt das Ansprungs- und Nachleuchteverhalten eines beispielhaften, in einer optischen Kodierung eingesetzten Materials. Das eingesetzte Material kann z. B. Ytterbium und Erbium enthalten, beispielsweise in einer Zusammensetzung von 20% Ytterbium und 2 % Erbium. Zum Zeitpunkt t0 wird die optische Kodierung dem Licht eines Lasers mit einer Wellenlänge von ca. 930 nm ausgesetzt. Die auf der y-Achse gemessene Strahlungsleistung, die von der optischen Kodierung emittiert wird, steigt in einem linear-ähnlichen Verlauf bis zu einem gewissen Sättigungsleistungsemissionswert zum Zeitpunkt t1 an. Bei anhaltender Beleuchtung bleibt die abgegebene Leistung auf diesem Emissionsplateau konstant. Zum Zeitpunkt t2 wird die optische Kodierung aus dem Licht des Lasers herausgenommen, es findet also keine Anregung mehr statt. Wie dargestellt, fällt die abgegebene Leistung exponentiell ab. Typische Zeiten zwischen dem Einschalten der Anregung bis zum Erreichen des Emissionsplateaus betragen 0,1 bis 0,2 Millisekunden. Typische Nachleuchtzeiträume zwischen dem Zeitpunkt des Ausschaltens der Anregung bis zum Ausklingen der Emission betragen zwischen 0,2 Millisekunden und 0,3 Millisekunden. Verschiedene Materialien weisen verschiedene Anspruchs- und Nachleuchteverhalten auf. Das bedeutet, dass durch die Wahl der Zusammensetzung des zur optischen Kodierung eingesetzten Materials eine einzigartige charakteristische Eigenschaft des Materials erzeugt werden kann.

## Patentansprüche

1. Optische Kodierung, die bei Bestrahlung mit elektromagnetischer Anregungsstrahlung aus dem infraroten Spektrum elektromagnetische Strahlung emittiert, die gegenüber der Anregungsstrahlung höherenergetisch ist.

2. Optische Kodierung gemäß Anspruch 1, wobei elektromagnetische Strahlung aus dem infraroten Spektrum emittiert wird, insbesondere mit einer Wellenlänge aus dem Intervall von 780nm bis 1100nm.

3. Optische Kodierung gemäß einem der vorhergehenden Ansprüche, wobei elektromagnetische Strahlung aus dem optisch sichtbaren Spektrum emittiert wird.

4. Optische Kodierung nach einem der vorherigen Ansprüche, wobei die Kodierung im Wesentlichen aus einem anorganischen Material besteht, vorzugsweise einer Keramik, die vorzugsweise anorganisch und/oder inert und/oder nicht toxisch ist..

5. Optische Kodierung nach einem der vorherigen Ansprüche, wobei die Kodierung aus mindestens zwei unterschiedlichen Materialien besteht, wobei die unterschiedlichen Materialien bei Anregungsstrahlung identischer Wellenlänge Strahlung unterschiedlicher Farbe emittieren.

6. Optische Kodierung nach einem der vorherigen Ansprüche, wobei die Kodierung eine maschinenlesbare Kodierung, vorzugsweise ein Strichcode, ein Matrixcode, ein Punktmuster, oder ein chaotisches Muster ist.

7. Optische Kodierung nach einem der vorherigen Ansprüche, wobei die Kodierung in einen Gegenstand eingebracht wird.

8. Optische Kodierung nach einem der vorherigen Ansprüche, wobei die Kodierung mit infraroter Strahlung von ca. 1µm, vorzugsweise von ca. 980nm, oder 1,5 µm, vorzugsweise ca. 1.500 nm, anregbar ist.

9. Optische Kodierung nach einem der vorherigen Ansprüche, wobei Information in Materialcharakteristika des die Kodierung bildenden Materials kodiert ist.

10. Optische Kodierung nach Anspruch 9, wobei die Materialcharakteristika aus dem Zeitraum zwischen Einschalten der Anregung und Erreichen eines Emissionsplateaus und/oder dem Zeitraum zwischen Abschalten der Anregung und Abklingen der Emission gewählt sind.

11. Informationsträger umfassend eine optische Kodierung nach einem der vorherigen Ansprüche.

12. Verfahren zur Herstellung einer Kodierung, umfassend folgende Schritte:
- Zur Verfügung Stellen eines Informationsträgers; und
- Einbringen einer optischen Kodierung gemäß eines der vorherigen Ansprüche in den Informationsträger oder Aufbringen einer optischen Kodierung gemäß eines der vorherigen Ansprüche auf den Informationsträger,
wobei der Informationsträger insbesondere ein Teil der Oberfläche eines Produkts, eines Gegenstandes oder einer Haut ist.

13. Verfahren nach Anspruch 12, wobei das Aufbringen der optischen Kodierung auf den Informationsträger mit einem der folgenden Druckverfahren stattfindet:
Laserdruck, Rotationstiefdruck, Flexodruck, Offsetdruck, Siebdruck, Thermotransferdruck oder Tintenstrahldruck.

14. Verfahren zum Entschlüsseln einer optischen Kodierung, umfassend folgende Schritte:
- Die optische Kodierung wird zur Verfügung gestellt;
- die optische Kodierung wird mit elektromagnetischer Anregungsstrahlung aus dem infraroten Spektrum, vorzugsweise mit einer Wellenlänge im Intervall von 940nm bis 980nm, oder von 1.500nm bis 1.600nm, insbesondere mit ca. 980nm oder ca. 1.500nm, bestrahlt, wobei die optischen Kodierung elektromagnetische Strahlung emittiert; und
- die von der optischen Kodierung emittierte elektromagnetische Strahlung, die gegenüber der Anregungsstrahlung höherenergetisch ist, wird ausgelesen.
